# EUROPEAN PATENT SPECIFICATION

(11) **EP 2 568 820 B1**
(45) Date of publication and mention of the grant of the patent: **05.09.2018**
(21) Application number: 11721711.7
(22) Date of filing: 09.05.2011
(51) Int. Cl.: A23G 1/56

(54) **COCOA POWDER COMPOSITIONS**
KAKAOPULVERZUSAMMENSETZUNGEN
COMPOSITIONS DE POUDRE DE CACAO

(30) Priority: 12.01.2011 EP 11000198; 17.09.2010 EP 10009770; 10.05.2010 EP 10004926
(43) Date of publication of application: 20.03.2013
(73) Proprietor: Cargill, Incorporated, Wayzata, MN 55391 (US)
(72) Inventor: BERENSCHOT, Erik, Paul, Alosin, NL-1544 AP Zaandijk (NL); BOGAERT, Piet, B-9850 Nevele (BE); HOPMANS, Nynke, Elisabeth, NL-1671 HM Medemblik (NL); SMITH, Paul, B-1410 Waterloo (BE); WALLECAN, Joël, Pierre, René, B-1140 Evere (BE)
(74) Representative: Dottridge, Cass A.C.
(86) International application number: PCT/EP2011/002297
(87) International publication number: WO 2011/141150

(56) References cited:
- EP-A1- 0 379 023
- WO-A1-2006/007993
- CA-A1- 1 073 732
- DE-A1- 1 492 843
- DE-A1- 1 934 649
- DE-A1- 2 809 536
- GB-A- 483 523
- GB-A- 1 189 058
- JP-A- 11 346 656
- JP-A- 62 272 941
- JP-A- 2000 125 767
- US-A- 2 336 254
- US-A- 3 006 763
- US-A- 3 028 242
- US-A- 3 459 557
- US-A- 4 016 337
- US-A- 4 338 350

## Description

### FIELD OF THE INVENTION

The present invention relates to instant cocoa powder compositions for use in the preparation of beverages and/or foodstuffs and to methods of making such compositions. In particular, the present invention relates to cocoa powder compositions which have good wettability and dispersibility in cold liquids.

### BACKGROUND OF THE INVENTION

Cocoa powder, typically containing 10-26% fat, is used in the food industry for a variety of applications, including confectionery, bakery, frozen desserts and beverages. In the beverage industry, it is used to produce compositions for both hot and cold beverages. One of the main problems faced in this respect is the difficulty of obtaining a uniform suspension of cocoa particles in cold liquids. It is indeed desirable that such compositions should wet out and disperse rapidly into cold (e.g. refrigerated) milk or water, producing a beverage which has a smooth texture (mouth-feel), which is uniform in appearance and which is stable for at least several minutes while the beverage is consumed. Unfortunately, when cocoa powder is added to cold liquids a number of undesirable phenomena are observed, including the formation of floating lumps ("floaters") at the liquid's surface due to poor wetting and excessive sedimentation of cocoa powder aggregates, leading to an overall undesirable sensory experience.

A number of methods have been proposed in the prior art for overcoming these problems. Perhaps the simplest of these methods is to make a paste of cocoa powder with a small amount of liquid to prevent lumping and then to add the rest of the cold liquid with vigorous stirring. Although this method is simple and does not require any additives, it is not practical for the end user (consumer).

Wettability and dispersibility can be significantly increased by adding emulsifiers such as lecithin to the cocoa powder. Lecithinated cocoa powders are sold by most major cocoa producers. Unfortunately, they still take more than two minutes to wet out and disperse in cold liquids (when measured according to Method 1, below). Increasing the lecithin level does not improve dispersibility but will lead to stickiness and handling problems which, in turn, can result in the formation of difficult-to-disperse lumps.

US patent 4,016,337 (Nestle/Hsu) tries to overcome the lumping problem by using silica in conjunction with lecithin and glycerol. A simple grinding process is employed to make a cocoa powder composition that disperses "readily" in cold water. Unfortunately, the test procedure and the time actually required for dispersion are not reported. A laboratory sample made with a similar composition and using a similar process showed very poor cold dispersibility (more than two minutes) when tested with modern wettability/dispersibility tests.

Another possibility that has been considered for increasing dispersibility of cocoa powders is the removal or reduction of their fat content. The perception that cocoa butter might be the cause for the failure of cocoa powders to disperse rapidly in cold liquids has motivated considerable prior art directed towards either extracting cocoa butter form cocoa powder with appropriate solvents (see, for example, Reid US1,802,533, Roselius US4,588,604, Rosenthal US1,849,886 and, more recently, Benado US5,041,245, Hall US6,569,480 and Trout US6,111,119) or by "agglomerating" cocoa powder with large amounts of sugar (75-85 parts per hundred) by steam/water-spraying or dry-grinding in the presence of a gum-like soy lecithin (see, for example, Peebles US2,850,388, Giddy US4,882,181, Nayyar US5,853,785 and Caly US5,487,904). Unfortunately, these processes can be prohibitively expensive.

Other attempts to increase the dispersibility/solubility of cocoa powder are described, for example, in US3459557, which attempts to increase cocoa powder dispersibility by de-airing powdered cocoa in a vacuum chamber; in GB1189258, which provides granules of cocoa powder comprising maltose and/or sorbitol and having a particle size of at least 200 microns; and in DE2809536, GB483523, and DE1492843, each of which discloses cocoa powder compositions comprising or "loaded with" high levels of sugar.

As can be seen from the foregoing discussion, despite many advances over the past decades, there is still an urgent need for a truly "instant" cocoa powder that is capable of being rapidly dispersed in cold milk or water without compromising other properties such as organoleptic properties and shelf life and which is not too expensive to produce.

### SUMMARY OF THE INVENTION

According to a first aspect of the present invention, there is provided a cocoa powder composition characterized in that it comprises, on a dry weight basis, 75-99.5% cocoa powder having an average particle size of 2-20 microns, and 0.5-20% of at least one hydrophilic agent, wherein the at least one hydrophilic agent is selected from the group consisting of: one or more sugar alcohols, one or more sugars and mixtures thereof, and wherein the cocoa powder is coated with the at least one hydrophilic agent.

According to a further aspect of the present invention, there is provided a sweetened cocoa powder composition characterized in that it comprises the above cocoa powder composition and a bulking sugar, preferably sucrose.

According to another aspect of the present invention, there is provided a method for producing a cocoa powder composition characterized in that it comprises the steps of: coating a cocoa powder or cocoa cake with a hydrophilic agent selected from the group consisting of: one or more sugar alcohols, one or more sugars and mixtures thereof, milling the coated cocoa powder and/or cocoa cake to achieve an average particle size of 2-20 microns; wherein, on a dry weight basis, cocoa powder is used in an amount of 75-99.5%, and the hydrophilic agent is used in an amount of 0.5-20% (such that, when mixed with bulking sugar, preferably in a ratio of 1:1 to 1:9, the resulting composition has a wettability, measured according to Method 1, of less than 30 seconds).

According to yet another aspect of the present invention, there is provided a beverage and/or foodstuff comprising a composition or a sweetened composition as described above or obtainable according to the above method.

### DETAILED DESCRIPTION

The present invention provides a cocoa powder composition characterized in that it comprises, on a dry weight basis, 75-99.5% cocoa powder and 0.5-20% of at least one hydrophilic agent, wherein the cocoa powder is coated with the at least one hydrophilic agent.

As used herein, the term "composition(s)" will refer to the above cocoa powder composition, unless explicitly stated otherwise (e.g. by reference to a "sweetened composition" or to a "food or beverage composition").

### Cocoa Powder

The cocoa powder may be from any source and processed according to any methods known in the art (e.g. to improve taste, texture and/or appearance). It may, for instance, be tempered to obtain a tempered cocoa powder, alkalized or dutched to improve color and/or flavor, or milled to obtain a finer or more uniform composition. The cocoa powder will have an average particle size of 2-20 microns. According to one particular embodiment, the cocoa powder will have an average particle size of 8-12 microns.

The cocoa powder will typically contain 10 to 12% by weight cocoa butter (also referred to as 10/12 cocoa powders) but may also be a high-fat cocoa powder or a reduced-fat cocoa powder. A high-fat cocoa powder will contain more than 12% by weight cocoa butter. Typically, it will contain more than 20% by weight cocoa butter. Examples of high-fat cocoa powders include 20/22 and 22/24 cocoa powders containing 20-22% cocoa butter and 22-24% cocoa butter by weight, respectively. High fat cocoa powders may be preferred, for example, when producing dispersible chocolate powders. A reduced-fat cocoa powder is a cocoa powder with a cocoa butter content below 10% by weight. Cocoa butter content can be reduced using any known method. A suitable method is described in WO2004/034801 (Cargill, Incorporated). Once the cocoa butter content is reduced to 5% by weight or less, the cocoa powder will be referred to as a "defatted cocoa powder". Defatted cocoa powders will preferably contain less than 2% cocoa butter by weight. According to a particular embodiment, the cocoa powders will contain 1% cocoa butter or less by weight. Alternatively, they may be substantially fat-free. Advantageously, fat-free cocoa powders will not need to be tempered.

Cocoa powder is included in the present composition in an amount of 75-99.5% by weight, preferably in an amount of 75-95% by weight, even more preferably in an amount of 80-85% by weight, based on total dry weight of the composition.

### Hydrophilic Agents

A hydrophilic agent is any compound or composition of matter that exhibits a hydrophilic character, i.e. that interacts with and tends to be dissolved by water. The hydrophilic agents of the present invention will necessarily be ones which are suitable for human consumption and will preferably have a sweet or neutral taste. The hydrophilic agents used in the present invention will be selected from the group consisting of sugars, polyols and mixtures thereof.

### • Sugars

The term "sugar" refers to edible, water soluble crystalline carbohydrates. They will preferably be selected from monosaccharides, disaccharides and oligosaccharides or mixtures of two or more thereof. More preferably, the at least one sugar of the present invention will be selected from monosaccharides, disaccharides, trisaccharides and mixtures of two or more thereof. Examples of suitable sugars include sucrose, lactose, glucose, galactose and fructose. Advantageously, the at least one sugar of the present invention will be selected from sucrose, glucose, fructose and mixtures of two or more thereof.

### Polyols

A polyol is an alcohol containing multiple hydroxyl groups. The at least one polyol of the present invention will be selected from one or more sugar alcohols. Sugar alcohols include, by way of example only, sorbitol, glycerol, erythritol, maltitol, isomalt, mannitol, lactitol, threitol, arabitol, ribitol and xylitol. Preferably, the polyol of the present invention will be selected from sorbitol, erythritol, maltitol and mixtures thereof.

The at least one hydrophilic agent will be included in the cocoa powder composition of the present invention in an amount of 0.5 to 20% by weight, based on total dry weight of the composition. According to a preferred embodiment, it will be included in an amount of between 1 and 15% by weight. According to another embodiment, it will be included in an amount of between 2 and 10% by weight. Alternatively, the at least one hydrophilic agent will be included in an amount of between 3 and 8% by weight, based on total dry weight of the composition.

The at least one hydrophilic agent is used to coat the cocoa powder.

### Coating

As used herein, reference to the cocoa powder being "coated" with at least one hydrophilic agent will mean that at least one hydrophilic agent will have adhered to, or been adsorbed onto, at least part of the surface of a majority (i.e. 50% or more) of the cocoa powder particles in the composition. In other words, it will not be necessary for all the particles to be coated over their entire surface - although of course they may be. Preferably at least 60%, more preferably at least 75%, more preferably at least 90% by weight of the particles will be coated over at least part of their surface. Advantageously, the particles will be coated over at least 10%, more preferably over at least 25%, of their surface area. According to certain embodiments, they may be coated over at least 50%, over at least 75%, or over at least 90% of their surface area. Preferably, the cocoa powder will be homogeneously coated with the at least one hydrophilic agent meaning that substantially all of the cocoa powder particles will be evenly coated throughout.

### Emulsifier

The cocoa powder composition of the present invention may further include one or more emulsifiers. Although any known emulsifier can be used (provided, of course, that it is safe for human consumption), it will be preferred to use a lecithin such as soy or sunflower lecithin.

Emulsifiers will preferably be used especially in combination with non-defatted cocoa powders, i.e. with cocoa powders having a cocoa butter content above 5% by weight. In this case, the composition will advantageously include the at least one emulsifier in an amount of no more than 15% by weight, preferably of no more than 10% by weight, more preferably of between 1 and 8% by weight, more preferably of between 2 and 7% by weight and, according to one particular embodiment, of between 2.5 and 6% by weight based on total dry weight of the cocoa powder.

With defatted cocoa powders (i.e. cocoa powders having 5% cocoa butter or less), the use of emulsifiers will not be necessary although it may still be desirable depending on the final application of the composition. If included, they should be used as specified above (e.g. preferably in an amount of up to 15% by weight).

Thus, the present invention provides, in one particular embodiment a cocoa powder composition characterized in that it comprises, on a dry weight basis, 80-99.5% defatted cocoa powder and 0.5-20% of at least one hydrophilic agent, wherein the defatted cocoa powder is coated with the at least one hydrophilic agent.

### Sweetened Composition

When mixed with at least one bulking sugar, the cocoa powder compositions of the present invention have improved cold dispersibility compared to standard cocoa powders, or even lecithinated cocoa powders, mixed with the same quantity of bulking sugar. Thus, the present invention further provides a sweetened cocoa powder composition comprising a cocoa powder composition as defined above together with at least one bulking sugar.

### • Bulking Sugar

The term "bulking sugar" as used herein refers to sugars suitable for use as bulking agents in the preparation of food or beverage compositions. They may also be used to increase the sweetness of the final product. Suitable examples of bulking sugars include, but are not limited to: sucrose, fructose, dextrose, maltodextrin, polydextrose and mixtures of two or more thereof. Alternatively, low calorie or calorie free sweeteners can be used, if necessary in combination with additional, ideally flavorless, bulking agents. Preferably, the bulking sugar will be sucrose and/or dextrose. It may be present in a crystalline, powder or liquid form (e.g. in the form of a syrup or of sugar pre-dissolved in water). Preferably a fine or extra fine crystalline sugar will be used. Alternatively, powdered sugars (of the "icing sugar" type) may be used.

The sweetened composition will preferably comprise the cocoa powder composition and bulking sugar in a dry weight ratio of from 2:1 to 1:9, preferably from 1:1 to 1:5, more preferably from 1:2 to 1:4. For example, in one possible embodiment, a weight ratio of about 3:7 can be used. Indeed, although it has traditionally been required to use bulking sugars in amounts of 80% or more by weight based on the total weight of the composition, the present invention advantageously allows for less bulking sugar to be used without unduly affecting cold dispersibility.

### • Cold Dispersibility

The expressions "cold dispersible" and "dispersible in cold liquids" as used herein refer to the fact that the compositions of the present invention are capable of being completely (or substantially completely) dispersed in a cold liquid in a relatively short time frame, as defined in more detail below.

Cold liquids will be understood to be liquids (such as water or milk) maintained at room temperature or below and, in particular, refrigerated liquids (having a temperature of about 5-7°C). Dispersibility can be assessed using a number of criteria including: wettability (if and how quickly a composition sinks through the surface of a liquid), lumping (if and how much of the composition remains on the liquid's surface after simple manual stirring) and sedimentation (the rate at which the composition sinks to the bottom of the liquid after stirring).

The sweetened cocoa powder compositions of the present invention will advantageously have a shorter wettability time than the same compositions in which the cocoa powder has not been coated with a hydrophilic agent. Ideally, the sweetened cocoa powder composition of the present invention will have a wettability, measured according to Method 1, of less than 30 seconds, although for certain applications, a wettability of up to 90 seconds would still be a significant improvement. According to certain preferred embodiments, it will have a wettability of less than 20 seconds. When added to cold milk, the composition will preferably be characterized by a substantial absence of lumping and a very slow rate of sedimentation (preferably, only a very small amount of composition will have sedimented 10 seconds after stirring).

### Other Ingredients

As noted above, the cocoa powder composition of the present invention may include one or more emulsifiers and, according to one particular embodiment, may be mixed with bulking sugar to produce a sweetened composition. Additional, optional ingredients may also be added. These may include, by way of example only, stabilizers, additional bulking agents, coloring agents, flavoring agents, milk solids, vitamins, polyphenols, nutraceuticals and so on. The requirement for and choice of such additional ingredients will be readily determined by a person skilled in the art depending, in particular, on the desired end use of the composition.

These ingredients may be added to the cocoa powder composition itself or to the sweetened cocoa powder composition after addition of the bulking sugar. Methods of producing the compositions of the present invention are also part of the present invention. Various aspects thereof will now be described in more detail.

### Method of Production

The present invention provides to a method of producing a cocoa powder composition as defined above (i.e. a cocoa powder composition which, when mixed with bulking sugar, has improved dispersibility) comprising the step of coating a cocoa powder or a cocoa cake with a hydrophilic agent.

The term "cocoa powder" is defined above. The term "cocoa cake", by contrast, refers to an unprocessed form of cocoa powder. By way of background information, cocoa nibs are ground to produce a cocoa liquor which is then pressed to extract cocoa butter, leaving the cocoa cake. The cake is milled and optionally sieved to produce cocoa powder. The process of the present invention may use cocoa powder or cocoa cake as a starting material in the production of the final cocoa powder compositions. It will of course be understood by the skilled person that mixtures of cocoa powder and cocoa cake may also be used.

The term "coating" has also already been defined. In order to achieve the desired coating of cocoa powder particles, the hydrophilic agent will preferably be provided in the form of a liquid. In particular, it may be in a molten form or in the form of an aqueous solution. Thus, for example, the hydrophilic agent may be selected from one or more molten polyols, one or more molten sugars, aqueous solutions of one or more polyols, aqueous solutions of one or more sugars and mixtures thereof.

Aqueous solutions can be obtained by allowing the one or more hydrophilic agents to dissolve in water. Preferably, they will comprise water in an amount of up to 10% by weight, based on the total dry weight of cocoa powder and/or cocoa cake. Suitable aqueous solutions will include, by way of example only, glucose and/or fructose syrups. According to one possible embodiment, the aqueous solution may be a solution of a disaccharide such as sucrose.

Some hydrophilic agents, such as erythritol, may be less soluble than others. These less soluble agents will preferably be used in their molten form. Alternatively, they may be used in the form of an aqueous solution but the aqueous solution will be prepared in a way that encourages dissolution (e.g. lower concentrations, use of heat, etc).

The hydrophilic agent may be coated onto the cocoa powder or cocoa cake using any technique known in the art. Preferably, the coating step will comprise: spraying the hydrophilic agent onto the cocoa powder and/or cocoa cake; or mixing the hydrophilic agent into the cocoa powder and/or cocoa cake, preferably by simple mechanical mixing (e.g. with a paddle, disc, pin or knife mixer).

When mixing is used, the mixing step may be performed at room temperature or above. Preferably, it will be performed at a temperature in the range of 20 to 100°C. More preferably, the mixing step will be performed at a temperature above 50°C, for instance, in the range of 60 to 100°C. Advantageously, the mixing step will be performed at a temperature above 75°C such as at a temperature in the range of 80 to 100°C. According to particular embodiments, the mixing step may be performed at a temperature of about 60°C or about 90°C.

As noted above, the cocoa powder composition of the present invention may also comprise one or more emulsifiers. As such, the above method may also include the step of adding one or more emulsifiers. Although the emulsifier(s) may be added both before or after the coating step, it will be preferred to first coat the cocoa powder and/or cocoa cake with the at least one hydrophilic agent and then to mix in the at least one emulsifier. Methods of blending emulsifiers into cocoa powder are well known in the art and any such known method may be used. The one or more emulsifiers will preferably be mixed, as described above, at a temperature in the range of 20 to 100°C, more preferably at a temperature above 50°C, such as at a temperature of about 60°C. Mixing will be preferably be performed in such a way that the cocoa powder will be coated with the one or more emulsifiers.

After mixing, the coated cocoa powder and/or cocoa cake, together with the one or more emulsifiers if used, will be milled. Milling (or grinding) can be achieved using any means known in the art, preferably under standard cocoa processing parameters. The milling step will be used to achieve the desired average particle size defined above.

According to one embodiment, the method of the present invention may also include a sieving step. Although this may be performed at any stage, it will preferably be carried out after coating, and optional milling, of the cocoa powder and/or cocoa cake. If such a step is included, the sieve will ideally be a 0.1 to 2.0 mm sieve.

When mixed with bulking sugar, the composition obtained through the above process will have a wettability, measured according to Method 1, of less than 30 seconds. Thus, the present invention also provides for the production of a sweetened cocoa powder composition comprising (a) coating a cocoa powder or a cocoa cake with a hydrophilic agent and (2) mixing the resulting cocoa powder composition with at least one bulking sugar.

The term "mixing" as used in reference to the bulking sugar may refer, for example, to simple mechanical mixing (e.g. with a paddle, disc, pin or knife mixer), granulation, homogenization (e.g. in a high-shear mixer), agglomeration or any other mixing or blending methods known to those skilled in the art.

Other steps that may be included in the method of the present invention will be apparent to a person skilled in the art. For example, the method may include one or more drying steps, cooling steps and/or tempering steps. It may also include the addition of one or more further optional ingredients as defined above (e.g. flavoring agents). Preferably, when used, these optional ingredients will be added to the composition after the coating step and, more preferably, after any milling and/or sieving steps.

Compositions obtained by the above method, and food or beverage compositions to which they may be added or in which they are included, are also part of the present invention.

### Beverages and Foodstuffs

Although the present composition can be used in the preparation of any conceivable type of beverage and/or foodstuff, it will be particularly suited for use in the preparation of beverages and/or foodstuffs which are dependent upon the satisfactory dispersion of a dry powder in a cold liquid. Examples of such products may include, without limitation, chocolate milk and other milk-based drinks, flavored yogurt drinks, milkshakes, sauces, infant formulas, creams, icings, mousses and whipped or "instant" desserts. Of course, the composition of the present invention may also be used in the preparation of hot beverages and/or foodstuffs such as hot chocolate drinks or sauces.

A summary of some of the advantages of the present invention is set out below:
- the method of the present invention is inexpensive and does not require any specialized equipment - i.e. agglomeration is not required to achieve good dispersibility.
- the sweetened cocoa powder compositions of the present invention are readily and rapidly dispersible in cold liquids.
- the sweetened compositions also result in less lump formation and reduced sedimentation compared to similar compositions prepared without the hydrophilic agent.
- the cocoa powder compositions (including sweetened cocoa powder compositions) have a longer shelf-life than similar compositions prepared without the hydrophilic agent (in particular, they maintain their improved dispersibility even after several weeks of storage).
- the cocoa powder compositions of the present invention require less bulking sugar than traditional cocoa powders or "lecithinated cocoa powders" to achieve a similar or even improved dispersibility.

As such, the use of hydrophilic agents to increase or improve the dispersibility of cocoa powder in cold liquids, in particular when coated onto the cocoa powder particles, is also a part of the present invention, various embodiments of which are described in more detail in the following, non-limiting examples.

### EXAMPLES

### Methodology

### • Method 1 - Wettability

150 ml of sterilized skimmed milk at 7°C is poured into a beaker. 15 grams of a selected cocoa powder or cocoa powder composition (mixed with sucrose) are gently poured onto the surface of the liquid. The time it takes for the powder to completely sink below the liquid's surface is recorded as the wettability time and graded as listed in Table 1.

| Table 1: Wettability | |
|---|---|
| Grade | Time required for complete wetting |
| Very good | 0 - 30 seconds |
| Good | 31 - 60 seconds |
| Moderate | 61 - 120 seconds |
| Weak | 121 - 180 seconds |
| Poor | More than 180 seconds |

### • Method 2 - Lumping and Sedimentation

After determining wettability time (or after 3 minutes, whichever is shorter), the liquid is manually stirred with a small dessert spoon, 15 times clockwise and 15 times anti-clockwise. The liquid is then left to settle for 10 seconds and the quantity of powder still on the surface - also referred to as "floaters" or lumping - is estimated (in relation to the total amount of powder added). Finally, the beakers are placed on a mirror stand to determine how much powder has settled onto the bottom ("sedimentation"). Lumping and sedimentation are graded according to the criteria of Tables 2 and 3, respectively.

| Table 2: Lumping (L) | |
|---|---|
| Grade | Description |
| 90-100% | All or nearly all powder remaining on the surface |
| 50-90% | More than half of the powder remaining on the surface |
| 20-50% | Substantial amount of powder remaining on the surface |
| 1-20% | Small to moderate amount of powder remaining on the surface |
| Less than 1% | No powder remaining on the surface |

| Table 3: Sedimentation (S) | |
|---|---|
| Grade | Description |
| 90-100% | All or nearly all product at the bottom |
| 50-90% | More than half of the product at the bottom |
| 20-50% | Substantial amount of product at the bottom |
| 1-20% | Small to moderate amount of product at the bottom |
| Less than 1% | No product on the bottom |

### • Method 3 - Dispersibility Rate

Another method used to measure the dispersibility of powders is described by Galet et al, (Trans IChemE, Part C, Food and Bioproducts Processing, 2004, 82(C4): 298-303). The technique uses an optical fiber sensor, positioned just below the middle of a container equipped with a mixing device. The container is filled with 2 liters of water to which 10g of cocoa powder (or cocoa powder composition) is added. The powder is dropped in a mass onto the liquid with the mixing device switched on. A light-emitting fiber emits light into the solution. The light is then back-scattered by the dispersed powder particles and detected by six light-receiving fibers positioned around the light-emitting fiber. The back-scattered light received by these fibers is converted from light intensity into voltage. The time needed to reach the maximal voltage is recorded. The recorded time and the amount of cocoa powder can then be used to calculate the dispersibility rate in g/s*10⁻³, as shown in Table 4.

| Table 4: Dispersibility | |
|---|---|
| Grade | Mean dispersion rate (in 10⁻³g/s) |
| - | 0-20 |
| +/- | 20-50 |
| + | 50-70 |
| ++ | >70 |

### Example 1

The following compositions were prepared (wherein S1 and S2 are compositions of the invention):

**Table 5:**

| Ingredients (wt%) | Ref. 1 | Ref. 2 | S1 | S2 |
|---|---|---|---|---|
| 10/12 cocoa powder (Gerkens™ DP70 cocoa powder*) | 100 | - | 82 | 94 |
| 10/12 lecithinated cocoa powder (Gerkens™ DP70W cocoa powder*) | - | 100 | - | - |
| Soy Lecithin | - | - | 5 | 5 |
| Water | - | - | 5 | - |
| Erythritol | - | - | 8 | - |
| Sorbitol | - | - | - | 1 |

| | | | | |
|---|---|---|---|---|
| * from Cargill | | | | |

Composition S1 was made by dissolving 8 grams of erythritol in 5 grams of water, obtaining a aqueous solution by simple mechanical mixing. This solution was then added to 82 grams cocoa powder and stirred through by a Hobart-type mixer, finally 5 grams lecithin was added and mixing was continued, at 60-65°C for 30 minutes.

Sample 2 was made by melting sorbitol and adding 1 gram of the molten sorbitol to 94 grams of cocoa powder. 5 grams of lecithin were then added. The ingredients were mixed by simple mechanical mixing in a Hobart-type mixer for 30 minutes at 60-65°C.

The obtained compositions were then mixed with extra-fine sucrose (particle size S0 = 0.35-0.55 mm) in a ratio of 20% cocoa powder composition + 80% sucrose. The wettability in cold milk (7°C) of these final compositions was then determined after no more than 7 days storage, using Method 1 described above. The results are shown in Table 6 (the shorter the time required for the composition to fully wet, the better).

**Table 6:**

| Sample | Ref. 1 | Ref. 2 | S1 | S2 |
|---|---|---|---|---|
| Wettability (s) | >181 | 90 | 6 | 8 |

Overall dispersibility was also assessed using the optical fiber method as described above. The results are shown in Table 7 (the higher the rate of dispersion, the better).

**Table 7:**

| Sample | Ref. 1 | Ref. 2 | S1 | S2 |
|---|---|---|---|---|
| Dispersibility (g/s*10⁻³) | 100 | 270 | 990 | 700 |

As demonstrated by the above results, the compositions of the present invention not only have better dispersibility in cold liquids than cocoa powder alone, but also better dispersibility than cocoa powder mixed with emulsifier. They are also stable over time, maintaining good wettability even after two weeks storage. The dispersibility results - that reflect the capacity of the powder to disperse in liquid but also its coloring capacity - confirm the improved wettability of compositions of the invention.

### Example 2

The following compositions were prepared by mechanical mixing (wherein C1, C2 and C3 are compositions of the invention):

**Table 8:**

| Ingredients (%wt) | Ref. 1 | Ref. 2 | C1 | C2 | C3 |
|---|---|---|---|---|---|
| 10/12 cocoa powder (Gerkens™ DP70 cocoa powder*) | 100 | - | 87 | 82 | 84.5 |
| 10/12 lecithinated cocoa powder with lecithin (Gerkens™ DP70W cocoa powder*) | - | 100 | - | - | |
| Soy Lecithin | - | - | 3.7 | 5 | 2.5 |
| Water | - | - | 5 | 5 | 5 |
| Sucrose | - | - | 4.3 | 8 | 8 |

The sucrose and water were mixed in advance to produce an aqueous solution. The aqueous solution was then mixed into the cocoa powder and the soy lecithin. The soy lecithin was the same lecithin as used in the lecithinated 10/12 cocoa powder (commercial name: DP70W). Mixing was performed at about 60°C, for 30 minutes, in a Hobart-type mixer.

Samples of the reference cocoa powders and of the cocoa powder compositions of the invention were then mixed with extra-fine sucrose (with an average particle size S0 = 0.35-0.55mm) in a ratio of 20% cocoa powder composition + 80% sucrose.

Further samples were used to make agglomerates: the compositions were mixed with icing sucrose, milled at 0.5 mm and subjected to a curtain of steam. The agglomerates were then sieved and a 0.5-1 mm fraction was selected for dispersibility tests (Methods 1-3).

The tests were performed in cold skimmed UHT milk (7°C) after at least 7 days storage at room temperature. The results are shown in Tables 9 and 10.

**Table 9: cocoa powder/sucrose mixes**

| Sample | Ref. 1 | Ref. 2 | C1 | C2 | C3 |
|---|---|---|---|---|---|
| Wettability (s.) | >180 | 90 | 39.5 | 13.6 | 25.6 |
| Floaters (%) | 51-99 | 1-20 | 0 | 0 | 0 |
| Sediments (%) | 21-50 | 1-20 | 1-20 | 1-20 | 1-20 |
| Dispersibility (10⁻³ g/s) | 106 | 270 | 561 | 932 | 600 |

**Table 10: cocoa powder/sucrose agglomerates**

| Sample | Ref. 1 | Ref. 2 | C1 | C2 | C3 |
|---|---|---|---|---|---|
| Wettability (s.) | >180 | 33.5 | 23.0 | 11 | 11 |
| Floaters (%) | 51-99 | 1-20 | 0 | 0 | 1-20 |
| Sediments (%) | 21-50 | 1-20 | 1-20 | 1-20 | 21-50 |

As demonstrated by the above results, the compositions of the present invention not only have better dispersibility in cold liquids than cocoa powder alone, but also better dispersibility than cocoa powder mixed with an emulsifier. Particularly striking is the composition C2, that has by far the best dispersibility rate and wettability. Notwithstanding the addition of water, all the compositions met requirements for microbiological safety.

### Example 3

Ref. 2 and C2 (as described in Example 2 above) were re-tested, this time with lower amounts of bulking sugar (sucrose), prepared by agglomeration. The bulking sugar and cocoa powder (or cocoa powder compositions) were mixed in a 70:30 ratio. The results are shown in Table 11.

**Table 11: agglomerates of sucrose/cocoa powder**

| Sample | Ref. 2 (80/20) | Ref. 2 (70/30) | C2 (80/20) | C2 (70/30) |
|---|---|---|---|---|
| Wettability (s.) | 33.5 | >180 | 11.0 | 35.9 |
| Floaters (%) | 1-20 | 21-50 | 0 | 1-20 |
| Sediments (%) | 1-20 | 1-20 | 1-20 | 1-20 |

It was found that the time needed for wetting strongly increased for simple mixtures of lecithinated cocoa powder when mixed with reduced amounts of bulking sugar (sucrose). Compositions of the present invention, however, even when mixed with reduced bulking sugar, still showed relatively good results - especially when using agglomeration.

### Example 4

Ref. 2, C2 and C3 (as described in Example 2 above) were tested to assess their long-term stability. Each sample was tested according to Methods 1 and 2 immediately after preparation, after 3 and 6 weeks of storage at room temperature and after 3 months of storage at room temperature. The samples were prepared by simple mechanical mixing with bulking sugar in the standard 80:20 ratio of sugar to cocoa powder described above.

**Table 12: Wettability (in sec)**

| | Ref 2 | C2 | C3 |
|---|---|---|---|
| immediately | 90 | 13.6 | 25.6 |
| after 3 weeks | 131 | 10.9 | 54.2 |
| after 6 weeks | 125 | 15.8 | 58.4 |
| after 3 months | >181 | 16.9 | 70.1 |

**Table 13: Lumping (%)**

| | Ref 2 | C2 | C3 |
|---|---|---|---|
| immediately | 1-20 | 0 | 0 |
| after 3 weeks | 1-20 | 0 | 0 |
| after 6 weeks | 1-20 | 0 | 0 |
| after 3 months | 21-50 | 0 | 0 |

**Table 14: Sedimentation (%)**

| | Ref 2 | C2 | C3 |
|---|---|---|---|
| immediately | 1-20 | 1-20 | 1-20 |
| after 3 weeks | 21-50 | 1-20 | 1-20 |
| after 6 weeks | 21-50 | 1-20 | 1-20 |
| after 3 months | 21-50 | 1-20 | 1-20 |

As can be seen, the wettability of the compositions of the invention, even after three months, is still better than that of the reference samples. What's more, the wettability of C2 remains very quick (below 20 seconds) even after extended storage.

### Example 5

The following compositions were prepared:

**Table 15:**

| Ingredients (wt%) | Ref 1 | Ref 2 | C4 | C5 | C6 |
|---|---|---|---|---|---|
| 10/12 Cocoa Powder (Gerkens™ DP70 cocoa powder*) | 100 | - | - | - | - |
| 10/12 Lecithinated Cocoa Powder (Gerkens™ DP70W cocoa powder*) | - | 100 | - | - | - |
| Defatted Cocoa Powder (0.6 wt% cocoa butter) | - | - | 87 | 87 | 82 |
| Soy Lecithin | - | - | - | - | 5 |
| Sucrose solution (62%) | - | - | 13 | - | 13 |
| Sorbitol solution (62%) | - | - | - | 13 | - |

For C4, C5 and C6: sucrose or sorbitol was mixed with water to form the 62% solutions listed in the above table. These solutions were then mechanically mixed with the cocoa powder (and lecithin when used). Mixing was performed at 60-65°C, for 30 minutes, in a Hobart-type mixer. The cocoa powder used in all the examples had an average particle size of approximately 8-12 microns.

Samples of the above products were then used, with varying amounts of bulking sugar (sucrose) to form both agglomerates and granulates as follows:
- agglomerates were formed by mixing the samples with icing sucrose, milled at 0.5 mm and subjected to a curtain of steam. The resulting agglomerates were sieved and the 0.5-1 mm fraction was selected for wettability tests.
- granulates were formed by mixing the samples with fine sucrose (with an average particle size of 0.35-0.55 mm) which is wetted with 5% water by weight based on the final composition. The sucrose is wetted and the cocoa powder sticks to the sucrose granules.

The wettability of both the agglomerates and the granulates in cold milk (7°C) of these final compositions was then determined after at least 7 days storage at room temperature, using Method 1 described above. Results for the agglomerates are shown in Table 16. Results for the granulates are shown in Table 17.

**Table 16: wettability of agglomerates with varying bulking sugar content**

| Sugar | Sample | Ref. 1 | Ref. 2 | C4 | C5 | C6 |
|---|---|---|---|---|---|---|
| 80% (ref) | W | >180s | 60s | 8.6s | 10.4s | - |
| | F | 50-90% | 1-20% | 0% | 0% | - |
| | S | 1-20% | 1-20% | 1-20% | 1-20% | - |
| 70% | W | >180s | >180s | 9.7s | 12.3s | - |
| | F | 50-90% | 50-90% | 0% | 0% | - |
| | S | 1-20% | 1-20% | 1-20% | 1-20% | - |
| 60% | W | >180s | >180s | 17.5s | 26.6s | - |
| | F | 50-90% | 50-90% | 0% | 0% | - |
| | S | 1-20% | 1-20% | 1-20% | 1-20% | - |
| 50% | W | >180s | >180s | 46.5s | 53.1s | 9.6s |
| | F | 50-90% | 50-90% | 0% | 0% | 0% |
| | S | 1-20% | 1-20% | 1-20% | 1-20% | 0% |
| 40% | W | >180s | >180s | 180s | 180s | 20.8 |
| | F | 50-90% | 50-90% | 0% | 0% | 0% |
| | S | 1-20% | 1-20% | 1-20% | 1-20% | 0% |
| 30% | W | >180s | >180s | - | - | 94.5 |
| | F | 50-90% | 50-90% | - | - | 0% |
| | S | 1-20% | 1-20% | - | - | 0% |

**Table 17: wettability of granulates with varying bulking sugar content**

| Sugar % | Sample | Ref. 1 | Ref. 2 | C4 | C5 |
|---|---|---|---|---|---|
| 80% (ref) | W | >180s | >180s | 8.6s | 10.4s |
| | F | 50-90% | 50-90% | 0% | 0% |
| | S | 1-20% | 1-20% | 21-50% | 21-50% |
| 70% | W | >180s | >180s | 8.8s | 12.2s |
| | F | 50-90% | 50-90% | 0% | 0% |
| | S | 1-20% | 1-20% | 21-50% | 21-50% |

As demonstrated by the above results, the compositions of the present invention not only have better dispersibility in cold liquids than standard cocoa powder alone, but also better dispersibility than standard cocoa powder when mixed with an emulsifier.

The above examples of the compositions of the present invention and methods for preparing them is not intended to be exhaustive or limiting but are merely included for illustrative purposes. Various equivalent modifications are possible within the scope of the invention, as those skilled in the art will recognize. The teachings of the present invention are applicable to other powder compositions. They may not be limited to the compositions and methods described above.

## Claims

1. A cocoa powder composition **characterized in that** it comprises, on a dry weight basis, 75-99.5% cocoa powder having an average particle size of 2-20 microns, and 0.5-20% of at least one hydrophilic agent, wherein the at least one hydrophilic agent is selected from the group consisting of: one or more sugar alcohols, one or more sugars and mixtures thereof, and wherein the cocoa powder is coated with the at least one hydrophilic agent.

2. A cocoa powder composition according to claim 1, **characterized in that** the one or more sugar alcohols is selected from sorbitol, erythritol, maltitol, and mixtures of two or more thereof.

3. A cocoa powder composition according to claim 1, **characterized in that** the one or more sugars is selected from the group consisting of: sucrose, glucose, fructose, and mixtures of two or more thereof.

4. A cocoa powder composition according to any one of the preceding claims, **characterized in that** the cocoa powder has an average particle size of 8-12 microns.

5. A cocoa powder composition according to any one of the preceding claims, **characterized in that** it further comprises an emulsifier, preferably in an amount of no more than 15% by weight.

6. A sweetened cocoa powder composition **characterized in that** it comprises a cocoa powder composition according to any one of the preceding claims and a bulking sugar, preferably sucrose.

7. A sweetened cocoa powder composition according to claim 6, **characterized in that** the cocoa powder composition and bulking sugar are present in a dry weight ratio of from 1:1 to 1:9, preferably from 1:2 to 1:5, more preferably from 3:7 to 1:4.

8. A sweetened cocoa powder composition according to claim 6 or claim 7, **characterized in that** it has a wettability, measured according to Method 1, of less than 30 seconds.

9. A method for producing a cocoa powder composition **characterized in that** it comprises the steps of: coating a cocoa powder or cocoa cake with a hydrophilic agent selected from the group consisting of: one or more sugar alcohols, one or more sugars and mixtures thereof and,- milling the coated cocoa powder and/or cocoa cake to achieve an average particle size of 2-20 microns; wherein, on a dry weight basis, cocoa powder is used in an amount of 75-99.5% and the hydrophilic agent is used in an amount of 0.5-20%.

10. A method according to claim 9, **characterized in that** the hydrophilic agent is in a liquid form.

11. A method according to claim 10, **characterized in that** the liquid hydrophilic agent is selected from the group consisting of: one or more molten sugar alcohols and/or sugars, one or more aqueous sugar alcohols and/or sugar solutions and mixtures thereof.

12. A method according to claim 11, **characterized in that** the aqueous sugar alcohol and/or sugar solution comprises water in an amount of up to 10% by weight, based on the total dry weight of cocoa powder or cocoa cake.

13. A method according to any one of claims 9 to 12, **characterized in that** the coating step comprises: spraying the hydrophilic agent onto the cocoa powder and/or cocoa cake; or mixing the hydrophilic agent into the cocoa powder and/or cocoa cake.

14. A beverage and/or foodstuff comprising a composition according to any one of claims 1 to 8 or obtainable according to the method of any one of claims 9 to 13.

## Patentansprüche

1. Kakaopulverzusammensetzung, **dadurch gekennzeichnet, dass** sie auf einer Trockengewichtbasis 75 bis 99,5% Kakaopulver umfasst, das eine mittlere Teilchengröße von 2 bis 20 Mikrometer hat, und 0,5 bis 20% mindestens eines hydrophilen Mittels, wobei das mindestens eine hydrophile Mittel aus der Gruppe ausgewählt ist, die besteht aus: einem oder mehr Zuckeralkoholen, einem oder mehr Zuckern und Gemischen davon, und wobei das Kakaopulver mit dem mindestens einem hydrophilen Mittel beschichtet ist.

2. Kakaopulverzusammensetzung nach Anspruch 1, **dadurch gekennzeichnet, dass** der eine oder die mehr Zuckeralkohole aus Sorbitol, Erythrit, Maltit und Gemischen aus zwei oder mehr davon ausgewählt sind.

3. Kakaopulverzusammensetzung nach Anspruch 1, **dadurch gekennzeichnet, dass** der eine oder die mehr Zuckeralkohole aus der Gruppe ausgewählt sind, die besteht aus: Saccharose, Glucose, Fructose und Gemischen aus zwei oder mehr davon.

4. Kakaopulverzusammensetzung nach einem der vorstehenden Ansprüche, **dadurch gekennzeichnet, dass** das Kakaopulver eine mittlere Teilchengröße von 8 bis 12 Mikrometer hat.

5. Kakaopulverzusammensetzung nach einem der vorstehenden Ansprüche, **dadurch gekennzeichnet, dass** sie weiter einen Emulgator umfasst, bevorzugt in einer Menge von nicht mehr als 15 Gew.-%.

6. Gesüßte Kakaopulverzusammensetzung, **dadurch gekennzeichnet, dass** sie eine Kakaopulverzusammensetzung nach einem der vorstehenden Ansprüche und einen Füllstoffzucker, bevorzugt Saccharose, umfasst.

7. Gesüßte Kakaopulverzusammensetzung nach Anspruch 6, **dadurch gekennzeichnet, dass** die Kakaopulverzusammensetzung und der Füllstoffzucker in einem Trockengewichtsverhältnis von 1:1 bis 1:9, bevorzugt von 1:2 bis 1:5, bevorzugter von 3:7 bis 1:4 vorliegen.

8. Gesüßte Kakaopulverzusammensetzung nach Anspruch 6 oder Anspruch 7, **dadurch gekennzeichnet, dass** sie eine Benetzbarkeit, die gemäß Verfahren 1 gemessen wird, von weniger als 30 Sekunden hat.

9. Verfahren zum Herstellen einer Kakaopulverzusammensetzung, **dadurch gekennzeichnet, dass** es die folgenden Schritte umfasst: Beschichten eines Kakaopulvers oder einer Kakaomasse mit einem hydrophilen Mittel, das aus der Gruppe ausgewählt ist, die besteht aus: einem oder mehr Zuckeralkoholen, einem oder mehr Zuckern und Gemischen davon und, - Mahlen des beschichteten Kakaopulvers und/oder der beschichteten Kakaomasse, um eine mittlere Teilchengröße von 2 bis 20 Mikrometer zu erzielen; wobei Kakaopulver auf einer Trockengewichtbasis in einer Menge von 75 bis 99,5 % verwendet wird, und das hydrophile Mittel in einer Menge von 0,5 bis 20 % verwendet wird.

10. Verfahren nach Anspruch 9, **dadurch gekennzeichnet, dass** das hydrophile Mittel in einer flüssigen Form vorliegt.

11. Verfahren nach Anspruch 10, **dadurch gekennzeichnet, dass** das flüssige hydrophile Mittel aus der Gruppe ausgewählt ist, die besteht aus: einem oder mehr geschmolzenen Zuckeralkoholen und/oder Zuckern, einem oder mehr wässrigen Zuckeralkoholen und/oder Zuckerlösungen und Gemischen davon.

12. Verfahren nach Anspruch 11, **dadurch gekennzeichnet, dass** der wässrige Zuckeralkohol und/oder die Zuckerlösung Wasser in einer Menge von bis zu 10 Gew.-% basierend auf dem Gesamttrockengewicht an Kakaopulver oder Kakaomasse umfasst.

13. Verfahren nach einem der Ansprüche 9 bis 12, **dadurch gekennzeichnet, dass** der Beschichtungsschritt umfasst: Sprühen des hydrophilen Mittels auf das Kakaopulver und/oder die Kakaomasse; oder Mischen des hydrophilen Mittels in das Kakaopulver und/oder die Kakaomasse.

14. Getränk und/oder Nahrungsmittel, das eine Zusammensetzung nach einem der Ansprüche 1 bis 8 umfasst oder nach dem Verfahren nach einem der Ansprüche 9 bis 13 erhaltbar ist.

## Revendications

1. Composition de poudre de cacao **caractérisée en ce qu'**elle comprend, sur une base de poids sec, 75 à 99,5 % d'une poudre de cacao présentant une taille particulaire moyenne de 2 à 20 microns, et 0,5 à 20 % d'au moins un agent hydrophile, dans laquelle l'au moins un agent hydrophile est sélectionné dans le groupe constitué : d'un ou de plusieurs alcools de sucre, d'un ou de plusieurs sucres et des mélanges de ceux-ci, et dans laquelle la poudre de cacao est enrobée avec l'au moins un agent hydrophile.

2. Composition de poudre de cacao selon la revendication 1, **caractérisée en ce que** les un ou plusieurs alcools de sucre sont sélectionnés parmi le sorbitol, l'érythritol, le maltitol, et les mélanges de deux ou plus de deux de ceux-ci.

3. Composition de poudre de cacao selon la revendication 1, **caractérisée en ce que** les un ou plusieurs sucres sont sélectionnés dans le groupe constitué : du saccharose, du glucose, du fructose, et des mélanges de deux ou plus de deux de ceux-ci.

4. Composition de poudre de cacao selon l'une quelconque des revendications précédentes, **caractérisée en ce que** la poudre de cacao présente une taille particulaire moyenne de 8 à 12 microns.

5. Composition de poudre de cacao selon l'une quelconque des revendications précédentes, **caractérisée en ce qu'**elle comprend en outre un émulsifiant, de préférence en une quantité d'au plus 15 % en poids.

6. Composition de poudre de cacao sucré **caractérisée en ce qu'**elle comprend une composition de poudre de cacao selon l'une quelconque des revendications précédentes et un sucre de remplissage, de préférence le saccharose.

7. Composition de poudre de cacao sucré selon la revendication 6, **caractérisée en ce que** la composition de poudre de cacao et le sucre de remplissage sont présents à un rapport en poids sec de 1:1 à 1:9, de préférence de 1:2 à 1:5, de manière davantage préférée de 3:7 à 1:4.

8. Composition de poudre de cacao sucré selon la revendication 6 ou la revendication 7, **caractérisée en ce qu'**elle présente une mouillabilité, mesurée selon le Procédé 1, de moins de 30 secondes.

9. Procédé de production d'une composition de poudre de cacao **caractérisé en ce qu'**il comprend les étapes suivantes : l'enrobage d'une poudre de cacao ou d'un tourteau de cacao avec un agent hydrophile sélectionné dans le groupe constitué : d'un ou de plusieurs alcools de sucre, d'un ou de plusieurs sucres et des mélanges de ceux-ci, et - le broyage de la poudre de cacao enrobée et/ou du tourteau de cacao enrobé pour obtenir une taille particulaire moyenne de 2 à 20 microns ; dans lequel, sur une base de poids sec, la poudre de cacao est utilisée en une quantité de 75 à 99,5 % et l'agent hydrophile est utilisé en une quantité de 0,5 à 20 %.

10. Procédé selon la revendication 9, **caractérisé en ce que** l'agent hydrophile est sous une forme liquide.

11. Procédé selon la revendication 10, **caractérisé en ce que** l'agent hydrophile liquide est sélectionné dans le groupe constitué : d'un ou de plusieurs alcools de sucre et/ou sucres fondus, d'une ou de plusieurs solutions aqueuses d'alcools de sucre et/ou de sucre et des mélanges de ceux-ci.

12. Procédé selon la revendication 11, **caractérisé en ce que** la solution aqueuse d'alcool de sucre et/ou de sucre comprend de l'eau en une quantité allant jusqu'à 10 % en poids, sur la base du poids sec total de la poudre de cacao ou du tourteau de cacao.

13. Procédé selon l'une quelconque des revendications 9 à 12, **caractérisé en ce que** l'étape d'enrobage comprend : la pulvérisation de l'agent hydrophile sur la poudre de cacao et/ou le tourteau de cacao ; ou le mélange de l'agent hydrophile dans la poudre de cacao et/ou le tourteau de cacao.

14. Boisson et/ou produit alimentaire comprenant une composition selon l'une quelconque des revendications 1 à 8 ou pouvant être obtenu selon le procédé selon l'une quelconque des revendications 9 à 13.
